# EUROPÄISCHE PATENTSCHRIFT

(11) **EP 2 493 718 B1**
(45) Veröffentlichungstag und Bekanntmachung des Hinweises auf die Patenterteilung: **19.09.2018**
(21) Anmeldenummer: 10771107.9
(22) Anmeldetag: 28.10.2010
(51) Int. Cl.: B60K 37/06, G06F 3/01, G06F 3/048

(54) **VERFAHREN ZUM BETREIBEN EINER BEDIENVORRICHTUNG UND BEDIENVORRICHTUNG**
METHOD FOR OPERATING A CONTROL DEVICE, AND CONTROL DEVICE
PROCÉDÉ POUR FAIRE FONCTIONNER UN DISPOSITIF DE COMMANDE ET DISPOSITIF DE COMMANDE

(30) Priorität: 29.10.2009 DE 102009051202
(43) Veröffentlichungstag der Anmeldung: 05.09.2012
(73) Patentinhaber: Volkswagen Aktiengesellschaft, 38440 Wolfsburg (DE)
(72) Erfinder: KUHN, Mathias, 14129 Berlin (DE); HAUSCHILD, Frank, 10587 Berlin (DE); DEHMANN, Rainer, 10961 Berlin (DE)
(74) Vertreter: Reitstötter Kinzebach
(86) Internationale Anmeldenummer: PCT/EP2010/066296
(87) Internationale Veröffentlichungsnummer: WO 2011/051361

(56) Entgegenhaltungen:
- DE-A1-102007 039 445
- US-A- 5 731 979

## Beschreibung

Die vorliegende Erfindung betrifft ein Verfahren zum Betreiben einer Bedienvorrichtung, wobei die Bedienvorrichtung eine Anzeigefläche und ein Bedienelement aufweist. Bei dem Verfahren wird mittels einer Annäherungserfassungseinrichtung ein in der Umgebung des Bedienelements gebildeter Detektionsbereich überwacht, so dass ein Betätigungselement in dem Detektionsbereich erfasst wird. Ferner wird auf der Anzeigefläche ein erster und ein zweiter Anzeigeinhalt angezeigt. Ferner betrifft die Erfindung eine Bedienvorrichtung mit einer Anzeigefläche zum Anzeigen eines ersten und eines zweiten Anzeigeinhalts, einem Bedienelement, einer Annäherungserfassungseinrichtung, mit welcher ein Betätigungselement in einem Detektionsbereich erfassbar ist, der in der Umgebung des Bedienelements gebildet ist, und einer Steuervorrichtung zum Steuern des auf der Anzeigefläche angezeigten Anzeigeinhalts.

Das Verfahren und die Bedienvorrichtung sind insbesondere Teil eines Fahrzeugs. Mittels des Verfahrens und der Bedienvorrichtung können insbesondere Einrichtungen eines Fahrzeugs bedient werden. Das Verfahren und die Bedienvorrichtung können jedoch auch in Verbindung mit anderen Geräten, insbesondere tragbaren Geräten, wie einem Musikspieler, einem Mobiltelefon oder einem mobilen Navigationssystem eingesetzt werden.

Aus der DE 10 2007 039 445 A1 ist ein Verfahren zum Anzeigen von Informationen mittels eines in einem Kraftfahrzeug befestigten Displays sowie eine Anzeigeeinrichtung für ein Kraftfahrzeug bekannt. Bei dem in dieser Druckschrift beschriebenen Verfahren wird von einem Anzeigezustand in einen Bedienzustand gewechselt, wenn eine Annäherung eines Objekts an eine Eingabeeinrichtung detektiert worden ist. Der Anzeigezustand zeichnet sich insbesondere dadurch aus, dass keine Schaltflächen dargestellt werden, die einem Bedienschritt zugeordnet sind. Im Bedienzustand werden hingegen solche Schaltflächen dargestellt.

Es ist wünschenswert, die Informationen im Kraftfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann, selbst wenn von der Anzeigeeinrichtung gegebenenfalls komplexe hierarchische Strukturen darstellbar sind. Die Informationsdarstellung und die mit einer Informationsdarstellung verbundene Bedienung in dem Kraftfahrzeug trägt somit zur Sicherheit beim Führen des Kraftfahrzeugs bei.

Der vorliegenden Erfindung liegt die Aufgabe zugrunde, ein Verfahren und eine Bedienvorrichtung der eingangs genannten Art bereitzustellen, bei denen der Bedienkomfort für den Nutzer verbessert ist und bei denen dem Nutzer umfassende Informationen angezeigt werden können, wenn der Nutzer die Bedienvorrichtung nicht betätigt.

Diese Aufgabe wird erfindungsgemäß durch ein Verfahren mit den Merkmalen des Anspruchs 1 und eine Bedienvorrichtung mit den Merkmalen des Anspruchs 8 gelöst. Vorteilhafte Aus- und Weiterbildungen ergeben sich aus den abhängigen Ansprüchen.

Das erfindungsgemäße Verfahren ist dadurch gekennzeichnet, dass wenn mittels der Annäherungserfassungseinrichtung ein Betätigungselement im Detektionsbereich erfasst worden ist, der erste Anzeigeinhalt nicht mehr angezeigt wird und Anzeigeflächen in betätigbare Schaltflächen umgewandelt und vergrößert dargestellt werden. In einer solchen Situation wird davon ausgegangen, dass der Nutzer mit dem Betätigungselement das Bedienelement betätigen will. Da bei dem erfindungsgemäßen Verfahren in diesem Fall der erste Anzeigeinhalt nicht mehr angezeigt wird, kann der zweite Anzeigeinhalt vergrößert angezeigt werden, und dem Nutzer eine Bedienung, welche von dem zweiten Anzeigeinhalt unterstützt wird, erleichtern. Auf diese Weise kann der Bedienkomfort für den Nutzer gesteigert werden. Ferner kann statt des ersten Anzeigeinhalts ein dritter Anzeigeinhalt angezeigt werden, welcher auch den Nutzer bei der Betätigung des Bedienelements unterstützen kann.

Bei dem Betätigungselement kann es sich um ein beliebiges Element handeln, mit welchem das Bedienelement betätigt werden kann. Das Betätigungselement ist insbesondere ein Betätigungsstift oder die Fingerspitze eines Nutzers.

Der erste Anzeigeinhalt umfasst insbesondere Statusinformationen. Solche Statusinformationen werden beispielsweise bei dem Einsatz des erfindungsgemäßen Verfahrens im Fahrzeug verwendet, um den Fahrzeuginsassen permanent Informationen anzuzeigen, welche für das Führen des Fahrzeugs relevant sind. Beispielsweise können die Statusinformationen die Außentemperatur und die Innentemperatur im Fahrzeug umfassen, Informationen, ob Verkehrsinformationen übertragen werden, Informationen zu Kommunikationsverbindungen, wie zum Beispiel dem Mobiltelefon-Provider und die Empfangsstärke im Netz dieses Providers, sowie Informationen zu Schnittstellen zu Einrichtungen innerhalb des Fahrzeugs, wie zum Beispiel einer Funkverbindung.

Der erste Anzeigeinhalt wird insbesondere unabhängig vom zweiten Anzeigeinhalt angezeigt, wenn mittels der Annäherungserfassungseinrichtung kein Betätigungselement im Detektionsbereich erfasst wird. Der erste Anzeigeinhalt kann somit permanente Informationsanzeigen umfassen, der zweite Anzeigeinhalt hingegen Darstellungen zu wechselnden Anwendungen. Die permanenten Informationsanzeigen des ersten Anzeigeinhalts werden jedoch ausgeblendet, wenn der Nutzer die Absicht hat, das Bedienelement zu betätigen. Auf diese Weise ergibt sich auf der Anzeigefläche ein größerer Anzeigebereich, welcher den Nutzer bei dem Bedienvorgang unterstützen kann. Dies ist insbesondere bei einem Einsatz des erfindungsgemäßen Verfahrens im Fahrzeug vorteilhaft, da die Größe der Anzeigefläche in diesem Fall relativ klein ist und ferner eine große Vielfalt an Informationen auf der Anzeigefläche dargestellt werden muss.

Gemäß einer Ausgestaltung des erfindungsgemäßen Verfahrens weist die Anzeigefläche eine berührungsempfindliche Oberfläche auf. Als Eingabevorrichtung wird in diesem Fall ein sogenannter Touchscreen bereitgestellt. Das Bedienelement kann in diesem Fall eine auf der Anzeigefläche angezeigte Schaltfläche umfassen. Der Detektionsbereich wird in diesem Fall vor der Anzeigefläche gebildet. Nähert sich somit der Nutzer beispielsweise mit seiner Fingerspitze der berührungsempfindlichen Oberfläche auf der Anzeigefläche an, tritt er mit der Fingerspitze in den Detektionsbereich ein. Dies wird von der Annäherungserfassungseinrichtung erfasst, woraufhin der erste Anzeigeinhalt ausgeblendet wird.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche eines Displays erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Oberfläche des Displays erfolgen.

Bei einer anderen Ausgestaltung des erfindungsgemäßen Verfahrens ist das Bedienelement abgesetzt von der Anzeigefläche angeordnet. Es kann sich beispielsweise um ein mechanisches Bedienelement, insbesondere um einen Dreh-Drück-Geber in der Mittelkonsole eines Fahrzeugs handeln, mit dem eine Bedienung möglich ist. Die Bedienung mittels des abgesetzten Bedienelements kann von der Anzeige auf der Anzeigefläche unterstützt werden. Beispielsweise können auch in diesem Fall auf der Anzeigefläche Schaltflächen angezeigt werden, die mittels des abgesetzten Bedienelements angesteuert werden können. Der Detektionsbereich ist in diesem Fall um das abgesetzte Bedienelement herum gebildet.

Gemäß einer Ausgestaltung des erfindungsgemäßen Verfahrens werden im zweiten Anzeigebereich Schaltflächen überlappend dargestellt, wenn mittels der Annäherungserfassungseinrichtung kein Betätigungselement im Detektionsbereich erfasst wird. Die Schaltflächen werden hingegen im zweiten Anzeigebereich nicht überlappend dargestellt, wenn mittels der Annäherungserfassungseinrichtung ein Betätigungselement im Detektionsbereich erfasst worden ist. Dadurch wird erreicht, dass eine große Vielzahl von Schaltflächen angezeigt werden kann, wenn keine Betätigungsabsicht des Nutzers detektiert wird. Wenn eine solche Betätigungsabsicht detektiert wird, da das Betätigungselement im Detektionsbereich erfasst worden ist, können die Schaltflächen hingegen so angezeigt werden, dass sie gut voneinander abgegrenzt sind und damit leicht vom Nutzer betätigt werden können. Durch diese Maßnahme wird der Bedienkomfort für den Nutzer beim Betätigen der Schaltflächen erhöht.

Des Weiteren kann der erste Anzeigeinhalt durchscheinend dargestellt werden, wenn mittels der Annäherungserfassungseinrichtung kein Betätigungselement in dem Detektionsbereich erfasst wird. Dadurch wird erreicht, dass der Nutzer durch den ersten Anzeigeinhalt durchscheinende Anzeige- bzw. Schaltflächen des zweiten Anzeigeinhalts bereits erkennen kann, bevor er mit dem Betätigungselement in den Detektionsbereich eintritt. Auch hierdurch wird der Bedienkomfort für den Nutzer erhöht.

Gemäß einer weiteren Ausgestaltung des erfindungsgemäßen Verfahrens wird der zweite Anzeigeinhalt zumindest zum Teil vergrößert dargestellt, wenn mittels der Annäherungserfassungseinrichtung ein Betätigungselement im Detektionsbereich erfasst worden ist. Falls der zweite Anzeigeinhalt Informationen darstellt, welche den Nutzer beim Bedienvorgang unterstützen, kann hierdurch erreicht werden, dass diese Informationen vom Nutzer besser wahrgenommen werden können.

Die Anzeige auf der Anzeigefläche mit dem ersten und dem zweiten Anzeigeinhalt in einem Zustand, bei dem kein Betätigungselement im Detektionsbereich erfasst worden ist, kann einem Anzeigezustand entsprechen, bei dem die dargstellten Informationen keinen Bedienschritten zugeordnet sind. Falls jedoch ein Betätigungselement im Detektionsbereich erfasst worden ist, kann der nunmehr allein angezeigte zweite Anzeigeinhalt einem sogenannten Bedienzustand entsprechen, bei dem Informationen dargestellt werden, die zumindest einem ausführbaren Bedienschritt zugeordnet sind. Erst wenn ein Betätigungselement im Detektionsbereich erfasst worden ist, verändert sich somit der Anzeigeinhalt so, dass mittels des Anzeigeinhalts ein Bedienvorgang durchgeführt werden kann. Beispielsweise kann von einer Anzeigefläche in eine betätigbare Schaltfläche umgeschaltet werden.

Die erfindungsgemäße Bedienvorrichtung ist dadurch gekennzeichnet, dass die Steuervorrichtung mit der Annäherungserfassungseinrichtung so gekoppelt ist, dass der erste Anzeigeinhalt nicht mehr angezeigt wird, wenn mittels der Annäherungserfassungseinrichtung ein Betätigungselement im Detektionsbereich erfasst worden ist.

Die erfindungsgemäße Bedienvorrichtung ist insbesondere so ausgebildet, dass sie die vorstehend genannten Verfahrensschritte teilweise oder vollständig ausführen kann. Sie ist beispielsweise in ein Fahrzeug integriert. Mittels der Bedienvorrichtung können in diesem Fall verschiedene Einrichtungen des Fahrzeugs bedient werden. Die erfindungsgemäße Bedienvorrichtung weist dieselben vorstehend genannten Vorteile wie das erfindungsgemäße Verfahren auf.

Gemäß einer Ausgestaltung der erfindungsgemäßen Bedienvorrichtung weist die Anzeigefläche eine berührungsempfindliche Oberfläche auf. Das Bedienelement kann in diesem Fall eine auf der Anzeigefläche angezeigte Schaltfläche umfassen. Das Bedienelement wird in diesem Fall somit von einem sogenannten Touchscreen bereitgestellt. Der Detektionsbereich ist in diesem Fall vor der Anzeigefläche bzw. vor dem Touchscreen gebildet.

Gemäß einer anderen Ausgestaltung ist das Bedienelement abgesetzt von der Anzeigefläche angeordnet. Es kann sich beispielsweise um ein mechanisches Bedienelement, zum Beispiel einen Dreh-Drück-Geber handeln. Die Betätigung dieses abgesetzten Bedienelements wird jedoch durch die Anzeige auf der Anzeigefläche unterstützt.

Die Annäherungserfassungseinrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungselement gestreuten und/oder reflektierten Anteils der Detektionsstrahlung umfassen. Sie kann insbesondere so ausgebildet sein, das Betätigungselement in dem Detektionsbereich anhand der Intensität der empfangenen Detektionsstrahlung zu erkennen. Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Ferner kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungselement gestreut oder reflektiert wurde. Mittels der Annäherungserfassungseinrichtung kann somit die Aufenthaltsdauer eines Betätigungselements separat für jede Detektionszone bestimmt werden.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Bedienvorrichtung in einer Aufsicht,
- Figur 2: zeigt die Bedienvorrichtung des Ausführungsbeispiels in einer vertikalen Schnittansicht,
- die Figuren 3A und 3B: zeigen Anzeigen in einem Anzeigezustand und einem Bedienzustand, die von einem Ausführungsbeispiel des erfindungsgemäßen Verfahrens erzeugt werden und

- die Figuren 4A und 4B: zeigen weitere Anzeigen in einem Anzeigezustand und einem Bedienzustand, die von einem Ausführungsbeispiel des erfindungsgemäßen Verfahrens erzeugt werden.

Das im Folgenden beschriebene Ausführungsbeispiel betrifft den Einsatz der Bedienvorrichtung und des Verfahrens in einem Fahrzeug, insbesondere einem Kraftfahrzeug. Mittels Bedienvorrichtung und durch das Verfahren können den Fahrzeuginsassen Informationen angezeigt werden. Ferner können die Fahrzeuginsassen mittels der Bedienvorrichtung Einrichtungen des Fahrzeugs bedienen und die Anzeige steuern. Es wird jedoch darauf hingewiesen, dass die Bedienvorrichtung und das Verfahren auf gleiche Weise auch in anderen Geräten, wie zum Beispiel mobilen Geräten, eingesetzt werden können.

Die Bedienvorrichtung umfasst eine Anzeigevorrichtung 1 mit einer Anzeigefläche 2, die so im Innenraum des Fahrzeugs angeordnet ist, dass sie für zumindest einen Fahrzeuginsassen, insbesondere den Fahrer, gut sichtbar ist. Die Anzeigefläche 2 kann von einem Display, insbesondere einem Flüssigkeitskristalldisplay, beliebiger Bauart bereitgestellt werden.

Des Weiteren kann der Anzeigeinhalt auf die Anzeigefläche 2 projiziert werden. Die Anzeigevorrichtung 1 kann somit auch ein sogenanntes Head-up-Display oder ein Headdown-Display sein.

Die Anzeigevorrichtung 1 ist mit einer Steuervorrichtung 3 verbunden, mit welcher Graphikdaten zur Informationsdarstellung auf der Anzeigefläche 2 erzeugbar sind. Die Steuervorrichtung 3 ist ferner mit einer Eingabevorrichtung 4 verbunden, über welche der Nutzer Einrichtungen des Fahrzeugs, deren Informationen auf der Anzeigefläche 2 angezeigt werden, steuern kann. Die Eingabevorrichtung stellt somit ein Bedienelement dar.

In dem vorliegenden Ausführungsbeispiel wird die Eingabevorrichtung 4 durch eine berührungsempfindliche Bedienoberfläche der Anzeigefläche 2 bereitgestellt. Beispielsweise kann eine Folie über der Anzeigefläche 2 angeordnet sein, mit welcher die Position einer Berührung eines Betätigungselements detektiert werden kann. Bei dem Betätigungselement handelt es sich insbesondere um die Fingerspitze eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche 2 angezeigten graphischen Objekt zugeordnet werden. Des Weiteren kann die Länge der Berührung bei einer bestimmten Position oder innerhalb eines bestimmten Bereichs erfasst werden. Auf der Anzeigefläche 2 kann eine betätigbare Schaltfläche als Bedienelement angezeigt werden.

Statt einer berührungsempfindlichen Bedienoberfläche kann die Eingabevorrichtung 4 auch von einem abgesetzten Bedienelement gebildet werden. In diesem Fall kann die Betätigung dieses Bedienelements von der Anzeige auf der Anzeigefläche 2 unterstützt werden. Im Folgenden wird jedoch davon ausgegangen, dass als Eingabevorrichtung 4 eine berührungsempfindliche Oberfläche vorgesehen ist.

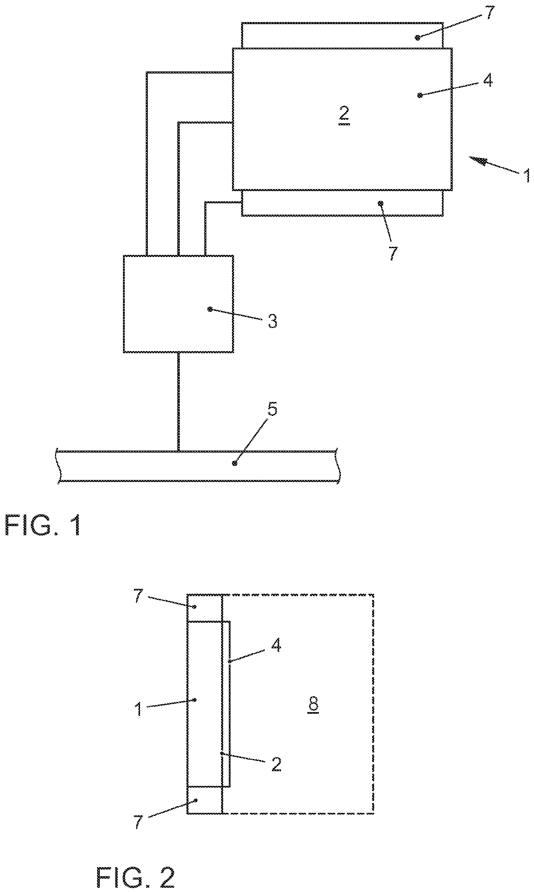

Des Weiteren umfasst die Bedienvorrichtung eine Annäherungserfassungseinrichtung 7. Mittels der Annäherungserfassungseinrichtung 7 kann ein Betätigungselement in einem Detektionsbereich 8 erfasst werden. Der Detektionsbereich 8 ist in Fig. 2 im Detail dargestellt. Der Detektionsbereich 8 ist so gebildet, dass eine Annäherung eines Betätigungselements an die Bedienoberfläche 4 erfasst wird.

In dem hier beschriebenen Ausführungsbeispiel bildet der Detektionsbereich 8 zumindest ein Volumen vor der Bedienoberfläche 4. Es ist insbesondere ein Quader gebildet, der mit seinen Seitenflächen in der Erstreckung, die parallel zu der Bedienoberfläche 4 verläuft, die Bedienoberfläche 4 vollständig umschließt. In einer Richtung senkrecht zur Bedienoberfläche 4 reicht der Quader von der Bedienoberfläche 4 oder unmittelbar vor der Bedienoberfläche 4 bis zu einem Abstand von z. B. etwa 40 cm. Der Abstand der äußeren Grenze des Detektionsbereichs 8 vor der Bedienoberfläche 4 wird dabei so gewählt, dass eine Annäherung an die Bedienoberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der Bedienoberfläche 4 so gewählt werden, dass das Betätigungselement oder ein anderes Objekt so selten wie möglich in den Detektionsbereich 8 bewegt wird, wenn keine Bedienung der Bedienoberfläche 4 beabsichtigt ist.

Im Folgenden werden verschiedene Ausbildungen der Annäherungserfassungseinrichtung 7 erläutert:
Gemäß einer ersten Ausgestaltung emittiert die Annäherungserfassungseinrichtung elektromagnetische Detektionsstrahlung, vorzugsweise im infraroten Wellenlängenbereich, in den Detektionsbereich 8. Die Detektionsstrahlung tritt in geeigneter Weise in der Nähe der Anzeigevorrichtung 1 so aus, dass sie den gesamten Detektionsbereich 8 erfassen kann. Beispielsweise kann oberhalb und unterhalb der Bedienoberfläche 4 jeweils ein Emissionsfenster angeordnet sein, welches für die Detektionsstrahlung transparent ist. Hinter den Emissionsfenstern sind Leuchtmittel zum Emittieren der Detektionsstrahlung angeordnet. Bei den Leuchtmitteln handelt es sich beispielsweise um Leuchtdioden, die Licht im infraroten Wellenlängenbereich emittieren. Des Weiteren ist hinter den Emissionsfenstern zumindest ein Empfangselement angeordnet. Bei dem Empfangselement kann es sich beispielsweise um eine Photodiode handeln. Um eine direkte Einstrahlung oder ein Auffangen von Streustrahlung der Leuchtmittel zu verhindern, ist über dem Empfangselement eine Abschirmung angeordnet, die eine Eintrittsöffnung umfasst. Unterhalb der Abschirmung befindet sich z. B. gemeinsam mit dem Empfangselement ein Referenzleuchtmittel, welches vorzugsweise identisch zu den Leuchtmitteln ausgebildet ist. Dieses Referenzleuchtmittel ist vorgesehen, um zeitlich alternierend zu den Leuchtmitteln Referenzstrahlung im selben Wellenlängen- bzw. Frequenzbereich wie die Leuchtmittel zu emittieren. Auf diese Weise kann eine Kompensation einer Hintergrundstrahlung im Fahrzeug erfolgen. Vor der Eintrittsöffnung der Abschirmung des Empfangselements kann eine weitere Optik vorgesehen sein, die Detektionsstrahlung der Leuchtmittel, die an einem Betätigungselement gestreut und/oder reflektiert wurde und die durch das Emissionsfenster hindurchgetreten ist, auf das Empfangselement fokussiert. Die Annäherungserfassungseinrichtung umfasst ferner eine Ansteuerelektronik, um die Leuchtmittel sowie das Referenzleuchtmittel anzusteuern.

Bei einer alternativen Ausbildung der Annäherungserfassungseinrichtung 7 werden Hochfrequenzsignale über den Körper des Nutzers übertragen und zur Positionserfassung der Fingerspitze des Nutzers und ggf. zur Bestimmung der Position des Nutzers verwendet. Im Sitz des Nutzers, d. h. beispielsweise des Fahrers, befindet sich eine Elektrodenanordnung. Über diese Elektrodenanordnung werden Hochfrequenzsignale in den Körper des Nutzers eingekoppelt. Die eingekoppelten Hochfrequenzsignale werden von Sensoren kapazitiv empfangen, wenn sich der Nutzer mit seiner Fingerspitze den Sensoren annähert. Anhand mehrerer Sensoren, die bei oder hinter der Bedienoberfläche 4 angeordnet sind, kann über die Intensitäten der bei den einzelnen Sensoren ausgekoppelten Signale mittels Triangulation die Position der Fingerspitze des Nutzers im Raum, d. h. insbesondere im Detektionsbereich 8, bestimmt werden. Dabei ist es nicht erforderlich, dass die Bedienoberfläche 4 oder die Sensoren berührt werden. Außerdem kann über die Elektrodenanordnung ein Identifikationscode kapazitiv in den Körper des Nutzers eingekoppelt werden und bei den Sensoren in der Anzeigevorrichtung 1 ausgekoppelt werden. Über den Körper des Nutzers kann somit ein Identifikationscode übertragen werden, welcher angibt, von welcher Bedienposition aus der Nutzer sich der Bedienoberfläche 4 annähert. Falls entsprechende Elektrodenanordnungen sowohl im Fahrersitz, als auch im Beifahrersitz angeordnet sind, kann der Steuervorrichtung 3 ein Signal übertragen werden, welches angibt, ob es sich bei dem Nutzer des Betätigungselements um den Fahrer oder den Beifahrer handelt. Diese Art der Identifizierung der Bedienposition kann auch in Verbindung mit anderen Ausgestaltungen der Annäherungserfassungseinrichtung 7 eingesetzt werden. Das Grundprinzip dieser Ausgestaltung der Annäherungserfassungseinrichtung 7 und weitere Details der Signalübertragung, sind in der DE 10 2004 048 956 A1 und der WO 2004/078536 A2 beschrieben.

Bei einer weiteren Ausgestaltung der Annäherungserfassungseinrichtung 7 wird die Position des Betätigungselements im Detektionsbereich 8 wie folgt erfasst: Entlang einer virtuellen Zeile wird ein Sende- und Empfangsschema konzipiert, mit dem der Aufenthaltsbereich des Betätigungselements kontinuierlich mit einem eng gebündelten Infrarotlichtstrahl gescannt wird. Dabei werden die einzelnen Sendeorte entlang der virtuellen Zeile fortlaufend zur Abgabe eines einzelnen Infrarotlichtimpulses veranlasst. Ist der letzte Sendeort in der Zeile, wird als Nächstes wieder der erste Sendeort angesteuert, so dass der gescannte Infrarotlichtstrahl zyklisch den Detektionsbereich 8 immer wieder von einer Seite zur anderen durchläuft. In Abhängigkeit vom Sendetakt der Infrarotlichtpulse, kann damit der Detektionsbereich 8 ununterbrochen gescannt und die Position des Betätigungselements detektiert werden. Die Messung der reflektierten Infrarotlichtpulsanteile ist an den Takt der ausgesendeten Infrarotlichtpulse angepasst. Die Zuordnung zu den einzelnen Sendeorten bzw. zu deren Einfallsbereich bestimmt dabei die Empfangscharakteristik der Messung. Details dieser Positionsermittlung eines Betätigungselements sind in der DE 100 58 244 C2 beschrieben.

Schließlich kann die Position des Betätigungselements auch mittels eines Kamerasystems und nachgeordneter Bildverarbeitung sowie durch ein Ultraschallsensorsystem erfolgen.

Die Annäherungserfassungseinrichtung 7 überträgt die aktuelle Position eines Betätigungselements im Detektionsbereich 8 fortwährend an die Steuervorrichtung 3. In Abhängigkeit von diesem Signal kann die Steuervorrichtung 3 die Anzeige auf der Anzeigefläche 2 verändern.

Schließlich ist die Steuervorrichtung 3 mit einem Fahrzeugbus 5 gekoppelt. Über diesen Fahrzeugbus 5 ist die Steuervorrichtung 3 mit weiteren Einrichtungen des Fahrzeugs verbunden, zu denen Informationen auf der Anzeigefläche 2 angezeigt werden sollen und die mittels der Eingabevorrichtung 4 bedient werden sollen.

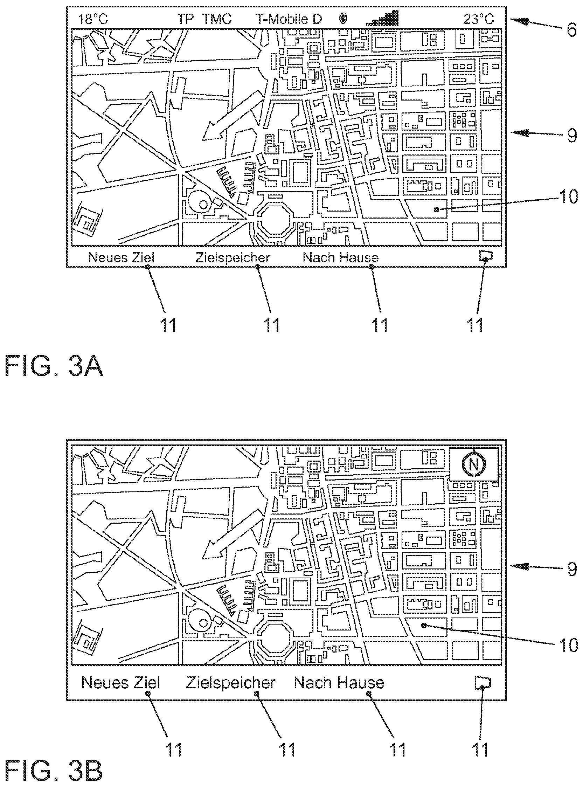

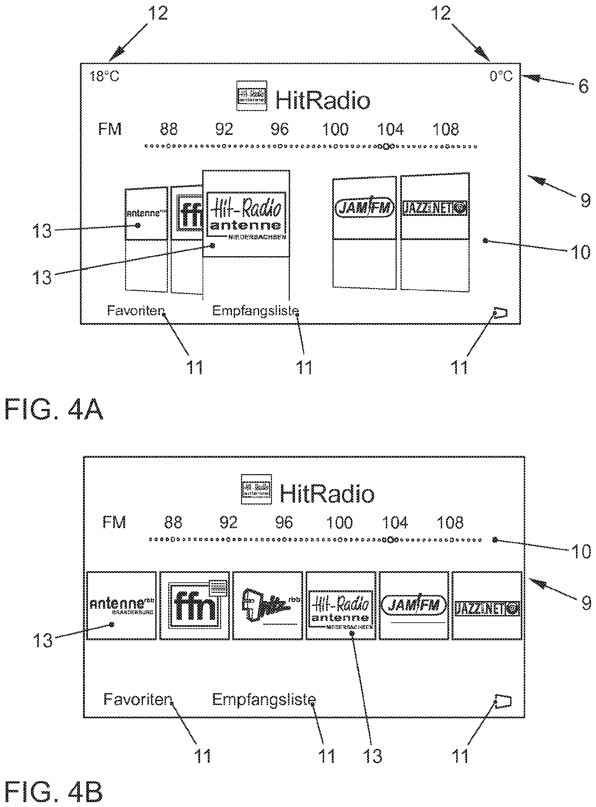

Im Folgenden wird ein Ausführungsbeispiel des erfindungsgemäßen Verfahrens, welches von der vorstehend beschriebenen Bedienvorrichtung ausführbar ist, mit Bezug zu den Figuren 3 und 4 im Detail erläutert:
In den Figuren 3A und 3B sind Anzeigen auf der Anzeigefläche 2 gezeigt, welche von einem Ausführungsbeispiel des erfindungsgemäßen Verfahrens erzeugt werden. In Figur 3A ist ein Anzeigemodus gezeigt, der angezeigt wird, wenn kein Betätigungselement von der Annäherungserfassungseinrichtung 7 im Detektionsbereich 8 erfasst wird. In Figur 3B ist ein Bedienmodus gezeigt, der angezeigt wird, wenn ein Betätigungselement von der Annäherungserfassungseinrichtung 7 im Detektionsbereich 8 erfasst worden ist.

Im Anzeigemodus wird im oberen Teil der Anzeigefläche 2 ein Anzeigebalken 6 mit Statusinformationen für die Aussentemperatur, den Empfang von Verkehrsinformationen, den Telekommunikations-Provider, eine Bluetooth-Verbindung, die Empfangsstärke einer Funkschnittstelle und die Innentemperatur im Fahrzeuginnenraum angezeigt. Der Anzeigebalken 6 bildet einen ersten Anzeigeinhalt.

Des Weiteren wird ein Anzeigebereich 9 mit einem zweiten Anzeigeinhalt angezeigt, welcher in dem in Figur 3A gezeigten Beispiel im Teilbereich 10 die Karte des Navigationssystems anzeigt und in einem weiteren Anzeigebalken darunter verschiedene Anzeigeflächen 11 der Bedienvorrichtung anzeigt.

Wenn sich der Nutzer nun der Eingabevorrichtung 4, d.h. beispielsweise der berührungsempfindlichen Oberfläche der Anzeigevorrichtung 1 annähert, tritt er zum Beispiel mit seiner Fingerspitze in den Detektionsbereich 8 ein. Dies wird von der Annäherungserfassungseinrichtung 7 erfasst, woraufhin diese ein entsprechendes Signal an die Steuervorrichtung 3 überträgt. Die Steuervorrichtung 3 steuert die Anzeigefläche 2 daraufhin so an, dass der erste Anzeigeinhalt, d.h. der Anzeigebalken 6, nicht mehr angezeigt wird. Ferner wird der zweite Anzeigeinhalt, d.h. der Anzeigebereich 9, auf die größere zur Verfügung stehende Anzeigefläche angepasst. Ferner wandeln sich die Anzeigeflächen 11 in betätigbare Schaltflächen 11 um. Dabei werden die Schaltflächen 11 im Bedienmodus größer dargestellt als die Anzeigeflächen 11 im Anzeigemodus. Hierdurch wird der Bedienkomfort für den Nutzer erhöht, da er die Schaltflächen 11 leichter betätigen kann.

Durch Betätigung der Schaltflächen 11 kann der Nutzer im Bediensystem des Fahrzeugs navigieren, und beispielsweise andere Anzeigeinhalte im Anzeigebereich 10 zur Anzeige bringen. Nachdem der Nutzer die Betätigung beendet hat und das Betätigungselement aus dem Detektionsbereich 8 entfernt hat, wird für die Anzeigefläche 2 wieder in den Anzeigemodus umgeschaltet, wobei in diesem Fall in dem Anzeigebereich 10 gegebenenfalls ein anderer Anzeigeinhalt angezeigt wird. Die im Anzeigebalken 6 angezeigten Statusinformationen verändern sich jedoch nicht, außer der Nutzer nimmt in einem Einstellungsmenü spezielle andere Einstellungen vor, mit denen die angezeigten Statusinformationen definiert werden können.

In den Figuren 4A und 4B ist ein weiteres Beispiel für eine Anzeige im Anzeigemodus (Figur 4A) und eine Anzeige im Bedienmodus (Figur 4B) gezeigt, die von dem Ausführungsbeispiel des erfindungsgemäßen Verfahrens erzeugt wird. In diesem Fall werden im Anzeigebalken 6 die Anzeigeflächen 12 mit der Innentemperatur und der Außentemperatur angezeigt. Im Anzeigebereich 10 werden Informationen zu dem Radio des Fahrzeugs angezeigt. Es werden für die einzelnen Radiosender Graphiken 13 angezeigt, die gegebenenfalls überlappend dargestellt werden können. Der aktuell eingestellte Radiosender kann insbesondere im Vordergrund angezeigt werden, andere empfangbare Radiosender können durch weitere Graphiken 13 repräsentiert im Hintergrund angezeigt werden. Unten auf der Anzeigefläche 2 werden, wie vorstehend beschrieben, die Anzeigeflächen 11 dargestellt.

Wenn mittels der Annäherungserfassungseinrichtung 7 ein Betätigungselement im Detektionsbereich 8 erfasst worden ist, schaltet die Steuervorrichtung 3 die Anzeige auf der Anzeigefläche 2 in einen Bedienmodus, wie er in Figur 4D dargestellt ist. Der Anzeigebalken 6 mit den Statusinformationen verschwindet und die Anzeigeflächen 11 werden in Schaltflächen 11 umgewandelt und vergrößert dargestellt. Ferner werden die Graphiken 13 für die einzelnen Radiosender nicht mehr überlappend dargestellt, sondern nebeneinander, so dass sie vom Nutzer leicht ausgewählt werden können. Die Graphiken 13 können dann auch als betätigbare Schaltflächen ausgebildet sein. Der Nutzer kann beispielsweise einen Radiosender auswählen, indem er die Graphik 13 auf der berührungsempfindlichen Oberfläche der Anzeigefläche 2 berührt.

### BEZUGSZEICHENLISTE

- 1: Anzeigevorrichtung
- 2: Anzeigefläche
- 3: Steuervorrichtung
- 4: Eingabevorrichtung/ Bedienelement
- 5: Fahrzeugbus
- 6: Anzeigebalken/erster Anzeigeinhalt
- 7: Annäherungserfassungseinrichtung
- 8: Detektionsbereich
- 9: Anzeigebereich/ zweiter Anzeigeinhalt
- 10: (Teil-)Anzeigebereich
- 11: Anzeigeflächen/Schaltflächen
- 13: Graphiken

## Patentansprüche

1. Verfahren zum Betreiben einer Bedienvorrichtung, insbesondere in einem Fahrzeug, wobei die Bedienvorrichtung eine Anzeigefläche (2) und ein Bedienelement (4) aufweist, bei dem
- mittels einer Annäherungserfassungseinrichtung (7) ein in der Umgebung des Bedienelements (4) gebildeter Detektionsbereich (8) überwacht wird, so dass ein Betätigungselement in dem Detektionsbereich (8) erfasst wird, und
- auf der Anzeigefläche (2) ein erster und zweiter Anzeigeinhalt (6, 9) angezeigt wird,
**dadurch gekennzeichnet, dass,**
- wenn mittels der Annäherungserfassungseinrichtung (7) ein Betätigungselement im Detektionsbereich erfasst worden ist, der erste Anzeigeinhalt (6) nicht mehr angezeigt wird und Anzeigeflächen (11) in betätigbare Schaltflächen (11) umgewandelt und vergrößert dargestellt werden.

2. Verfahren nach Anspruch 1,
**dadurch gekennzeichnet, dass**
der erste Anzeigeinhalt (6) Statusinformationen umfasst.

3. Verfahren nach Anspruch 1 oder 2,
**dadurch gekennzeichnet, dass**
der erste Anzeigeinhalt (6) unabhängig vom zweiten Anzeigeinhalt (9) angezeigt wird, wenn mittels der Annäherungserfassungseinrichtung (7) kein Betätigungselement im Detektionsbereich (8) erfasst wird.

4. Verfahren nach einem der vorhergehenden Ansprüche,
**dadurch gekennzeichnet, dass**
die Anzeigefläche (2) eine berührungsempfindliche Oberfläche aufweist, dass das Bedienelement (4) eine auf der Anzeigefläche (2) angezeigte Schaltfläche (11) umfasst und dass der Detektionsbereich (8) vor der Anzeigefläche gebildet wird.

5. Verfahren nach einem der vorhergehenden Ansprüche,
**dadurch gekennzeichnet, dass**
im zweiten Anzeigebereich (9) Schaltflächen (13) nicht überlappend dargestellt werden, wenn mittels der Annäherungserfassungseinrichtung (7) ein Betätigungselement im Detektionsbereich (8) erfasst worden ist.

6. Verfahren nach einem der vorhergehenden Ansprüche,
**dadurch gekennzeichnet, dass**
der erste Anzeigeinhalt durchscheinend dargestellt wird, wenn mittels der Annäherungserfassungseinrichtung (7) kein Betätigungselement im Detektionsbereich (8) erfasst wird.

7. Bedienvorrichtung, insbesondere für ein Fahrzeug, mit
- einer Anzeigefläche (2) zum Anzeigen eines ersten und eines zweiten Anzeigeinhalts (6, 9),
- einem Bedienelement (4),
- einer Annäherungserfassungseinrichtung (7), mittels welcher ein Betätigungselement in einem Detektionsbereich (8) erfassbar ist, der in der Umgebung des Bedienelements (4) gebildet ist, und
- einer Steuervorrichtung (3) zum Steuern des auf der Anzeigefläche (2) angezeigten Anzeigeinhalts,
**dadurch gekennzeichnet, dass**
- die Steuervorrichtung (3) mit der Annäherungserfassungseinrichtung (7) so gekoppelt ist, dass der erste Anzeigeinhalt (6) nicht mehr angezeigt wird und Anzeigeflächen (11) in betätigbare Schaltflächen (11) umgewandelt und vergrößert dargestellt werden, wenn mittels der Annäherungserfassungseinrichtung (7) ein Betätigungselement im Detektionsbereich (8) erfasst worden ist.

8. Bedienvorrichtung nach Anspruch 7,
**dadurch gekennzeichnet, dass**
die Anzeigefläche (2) eine berührungsempfindliche Oberfläche aufweist, dass das Bedienelement (4) eine auf der Anzeigefläche (2) angezeigte Schaltfläche (11,13) umfasst und dass der Detektionsbereich (8) vor der Anzeigefläche (2) gebildet ist.

9. Bedienvorrichtung nach Anspruch 7 oder 8,
**dadurch gekennzeichnet, dass**
das Bedienelement (4) abgesetzt von der Anzeigefläche (2) angeordnet ist.

## Claims

1. Method for operating a control device, in particular in a vehicle, wherein the control device has a display surface (2) and a control element (4), in which
- a detection region (8) which is formed in the surroundings of the control element (4) is monitored by means of a proximity sensing device (7) so that an activation element is detected in the detection region (8), and
- first and second display contents (6, 9) are displayed on the display surface (2),
**characterized in that**
- if an activation element has been detected in the detection region by means of the proximity sensing device (7), the first display content (6) is no longer displayed and display surfaces (11) are converted into control buttons (11) which can be activated and are displayed enlarged.

2. Method according to Claim 1,
**characterized in that**
the first display content (6) comprises status information.

3. Method according to Claim 1 or 2,
**characterized in that**
the first display content (6) is displayed independently of the second display content (9) if no activation element is detected in the detection region (8) by means of the proximity sensing device (7).

4. Method according to one of the preceding claims,
**characterized in that**
the display surface (2) has a touch-sensitive surface, **in that** the control element (4) comprises a control button (11) which is displayed on the display surface (2), and **in that** the detection region (8) is formed in front of the display surface.

5. Method according to one of the preceding claims,
**characterized in that**
control buttons (13) are not displayed in an overlapping fashion in the second display region (9) if an activation element has been detected in the detection region (8) by means of the proximity sensing device (7).

6. Method according to one of the preceding claims,
**characterized in that**
the first display content is displayed in a transparent fashion if no activation element is detected in the detection region (8) by means of the proximity sensing device (7).

7. Control device, in particular for a vehicle, having
- a display surface (2) for displaying first and second display contents (6, 9),
- a control element (4),
- a proximity sensing device (7) by means of which an activation element can be detected in a detection region (8) which is formed in the surroundings of the control element (4), and
- a control device (3) for controlling the display content which is displayed on the display surface (2),
**characterized in that**
- the control device (3) is coupled to the proximity sensing device (7) in such a way that the first display content (6) is no longer displayed and display surfaces (11) are converted into control buttons (11) which can be activated and are displayed enlarged if an activation element has been detected in the detection region (8) by means of the proximity sensing device (7).

8. Control device according to Claim 7,
**characterized in that**
the display surface (2) has a touch-sensitive surface, **in that** the control element (4) comprises a control button (11, 13) which is displayed on the display surface (2), and **in that** the detection region (8) is formed in front of the display surface (2).

9. Control device according to Claim 7 or 8,
**characterized in that**
the control element (4) is arranged offset from the display surface (2).

## Revendications

1. Procédé de fonctionnement d'un dispositif de commande, destiné en particulier à un véhicule, le dispositif de commande possédant une surface d'affichage (2) et un élément de manoeuvre (4), procédé dans lequel
- une zone de détection (8), formée au voisinage de l'élément de commande (4), est surveillée au moyen d'un dispositif de détection de proximité (7) de manière à détecter un élément d'actionnement dans la zone de détection (8), et
- un premier et un deuxième contenu d'affichage (6, 9) sont affichés sur la surface d'affichage (2), **caractérisé en ce que**
- si un élément d'actionnement a été détecté dans la zone de détection au moyen du dispositif de détection de proximité (7), le premier contenu d'affichage (6) n'est plus affiché et les surfaces d'affichage (11) sont converties en boutons de commande actionnables (11) et représentées de manière agrandie.

2. Procédé selon la revendication 1,
**caractérisé en ce que**
le premier contenu d'affichage (6) contient des informations d'état.

3. Procédé selon la revendication 1 ou 2,
**caractérisé en ce que**
le premier contenu d'affichage (6) est affiché indépendamment du deuxième contenu d'affichage (9) si aucun élément d'actionnement n'est détecté dans la zone de détection (8) au moyen du dispositif de détection d'approche (7).

4. Procédé selon l'une des revendications précédentes,
**caractérisé en ce que**
la surface d'affichage (2) possède une superficie tactile, **en ce que** l'élément de commande (4) comporte un bouton de commande (11) affiché sur la surface d'affichage (2) et **en ce que** la zone de détection (8) est formée devant la surface d'affichage.

5. Procédé selon l'une des revendications précédentes,
**caractérisé en ce que**
des boutons de commande (13) sont représentés sans se chevaucher dans la deuxième zone d'affichage (9) lorsqu'un élément d'actionnement a été détecté dans la zone de détection (8) au moyen du dispositif de détection de proximité (7).

6. Procédé selon l'une des revendications précédentes,
**caractérisé en ce que**
le premier contenu d'affichage est affiché de manière translucide lorsqu'aucun élément d'actionnement n'est détecté dans la zone de détection (8) au moyen du dispositif de détection de proximité (7).

7. Dispositif de commande, destiné en particulier à un véhicule, comprenant
- une surface d'affichage (2) destinée à afficher un premier et un deuxième contenu d'affichage (6, 9),
- un élément d'actionnement (4),
- un dispositif de détection d'approche (7) au moyen duquel un élément d'actionnement peut être détecté dans une zone de détection (8) qui est formée au voisinage de l'élément de commande (4), et
- un dispositif de commande (3) destiné à commander le contenu d'affichage affiché sur la surface d'affichage (2),
**caractérisé en ce que**
- le dispositif de commande (3) est couplé au dispositif de détection de proximité (7) de sorte que le premier contenu d'affichage (6) n'est plus affiché et des zones d'affichage (11) sont converties en boutons de commande actionnables (11) et représentées de manière agrandie si un élément d'actionnement a été détecté dans la zone de détection (8) au moyen du dispositif de détection de proximité (7).

8. Dispositif de commande selon la revendication 7,
**caractérisé en ce que**
la surface d'affichage (2) possède une superficie tactile, **en ce que** l'élément de commande (4) comporte un bouton de commande (11, 13) affiché sur la surface d'affichage (2) et **en ce que** la zone de détection (8) est formée devant la surface d'affichage (2).

9. Dispositif de commande selon la revendication 7 ou 8,
**caractérisé en ce que**
l'élément de commande (4) est disposé de manière décalée par rapport à la surface d'affichage (2).
